# EUROPÄISCHE PATENTANMELDUNG

(11) **EP 2 952 533 A1**
(43) Veröffentlichungstag der Anmeldung: **09.12.2015**
(21) Anmeldenummer: 14171163.0
(22) Anmeldetag: 04.06.2014
(51) Int. Cl.: C08G 18/71, C08F 230/08, C08G 18/28, C08G 65/336

(54) **Zinn- und Phthalat-freier Dichtstoff auf Basis von silanterminierten Polymeren**

(71) Anmelder: Sika Technology AG, 6340 Baar (CH)
(72) Erfinder: Choffat, Fabien, 4522 Rüttenen (CH)
(74) Vertreter: Sika Patent Attorneys

(57) **Zusammenfassung**

Gegenstand der vorliegenden Erfindung ist ein feuchtigkeitshärtender Dichtstoff umfassend a) mindestens ein silanfunktionelles Polymer und b) mindestens einen Katalysator für die Vernetzung des silanfunktionellen Polymers, wobei der Dichtstoff frei von Organozinn-Verbindungen ist und im ausgehärteten Zustand einen Sekantenmodul bei 100% Dehnung und 23°C, bestimmt nach ISO 8339, von weniger als 0,4 MPa und ein Rückstellvermögen bei 100% Dehnung, bestimmt nach ISO 7389, von grösser als 70% aufweist. Der Dichtstoff eignet sich insbesondere als Baudichtstoff der Klasse 25LM gemäss DIN EN ISO 11600, insbesondere als Fassaden-Dichtstoff.

## Beschreibung

### Technisches Gebiet

Die Erfindung betrifft Zinn- und Phthalat-freie feuchtigkeitshärtende Dichtstoffe auf Basis silanfunktioneller Polymere.

### Stand der Technik

Feuchtigkeitshärtende Dichtstoffe auf Basis von silanfunktionellen Polymeren (STP) sind bekannt und werden z.B. im Bau in grossen Mengen als elastische Dichtstoffe eingesetzt. Abhängig vom Einsatzgebiet und den Anforderungen an solche Dichtstoffe bei der Applikation und nach Aushärtung enthalten diese unterschiedliche Komponenten.

In der Norm DIN EN ISO 11600 werden Fugendichtstoffe in Abhängigkeit von den jeweiligen Anforderungen in unterschiedliche Klassen klassifiziert. In der Klasse 25LM sind Dichtstoffe klassifiziert, die einen niedrigen Modul und ein hohes Rückstellvermögen aufweisen und besonders hochwertige Dichtstoffe darstellen, die sich als Baudichtstoffe, insbesondere als Fassaden-Dichtstoffe, eignen.

Dichtstoffe auf Basis von silanfunktionellen Polymeren, die die Anforderungen der Klasse 25LM gemäss DIN EN ISO 11600 erfüllen, sind bekannt. Die auf dem Markt befindlichen STP-Produkte enthalten aber in der Regel Organozinn-Verbindungen als Katalysatoren und/oder phthalathaltige Weichmacher. Weiterhin spalten sie in der Regel bei der Aushärtung Methanol ab.

Organozinn-Verbindungen sind gesundheitlich bedenklich. Ausserdem sind Organozinn-Verbindungen wärmeempfindlich. Auch phthalathaltige Weichmacher gelten als gesundheitsgefährdend und werden aufgrund behördlicher Regelungen aus immer mehr Produkten verbannt. Die Freisetzung von Methanol ist problematisch, da Methanol und vor allem seine Metaboliten für den Menschen giftig sind und in hohen Dosen zu gesundheitlichen Schäden führen können.

Besonders strenge Regelungen hinsichtlich des Chemikalieneinsatzes finden sich in den skandinavischen Ländern. Hier werden Organozinn-Verbindungen und phthalathaltige Weichmacher als zu vermeidende Stoffgruppen eingestuft. Es ist zu erwarten, dass der Trend zu Vorschriften, die die Verwendung von Substanzen einschränken oder ganz verbieten, die als gesundheitlich bedenklich angesehen werden, sich auch in anderen Ländern weiter verschärfen wird.

Unter ökologischen und gesundheitlichen Gesichtspunkten besteht ferner ein Bedarf, neue Einsatzmöglichkeiten für nachwachsende Rohstoffe zu finden.

### Darstellung der Erfindung

Aufgabe der vorliegenden Erfindung ist es daher, einen feuchtigkeitshärtenden Dichtstoff auf Basis von silanfunktionellen Polymeren bereitzustellen, welcher ohne gesundheitlich bedenkliche Substanzen auskommt und gleichzeitig im ausgehärteten Zustand verhältnismässig elastisch ist und ein hohes Rückstellvermögen aufweist, ohne die Applikationseigenschaften massgeblich zu beeinträchtigen. Er soll sich als Baudichtstoff und insbesondere als Fassaden-Dichtstoff eignen.

Insbesondere sollte ein hochwertiger Dichtstoff bereitgestellt werden, der gesundheitlich unbedenklich ist, und gleichzeitig die hohen Anforderungen an Dichtstoffe der Klasse 25LM gemäss ISO 11600 ohne Beeinträchtigung der sonstigen Applikationseigenschaften, wie z.B. Haftbarkeit, erfüllt. Desweiteren sollte der Einsatz von Komponenten auf Basis nachwachsender Rohstoffe und eine geringe Emissionsbelastung möglich sein. Der Dichtstoff soll auch eine gute thermische Stabilität und Lagerstabilität besitzen.

Überraschenderweise wurde nun gefunden, dass Dichtstoffe wie in Anspruch 1 definiert diese Aufgabe lösen.

Die erfindungsgemässen Dichtstoffe sind weitgehend frei von gesundheitlich bedenklichen Stoffen, besitzen gute Applikationseigenschaften und können als Highend-Baudichtstoffe eingesetzt werden. Sie weisen im ausgehärteten Zustand eine hohe Elastizität auf und können als Dichtstoffe mit niedriger Emissionsbelastung formuliert werden.

Überraschenderweise war es auch vorteilhaft, einen relativ grossen Anteil an Substanzen auf Basis nachwachsender Rohstoffe als Weichmacher in diesen Dichtstoffen zu verwenden, wobei die günstigen Eigenschaften im Wesentlichen beibehalten werden.

Die Erfindung betrifft auch die Verwendung der Dichtstoffe als Baudichtstoffe und die aus den Dichtstoffen nach Feuchtigkeitshärtung erhältlichen Produkte. Besonders bevorzugte Ausführungsformen der Erfindung sind Gegenstand der abhängigen Ansprüche.

### Wege zur Ausführung der Erfindung

Die Erfindung betrifft einen feuchtigkeitshärtenden Dichtstoff umfassend
a) mindestens ein silanfunktionelles Polymer **P** und
b) mindestens einen Katalysator für die Vernetzung des silanfunktionellen Polymers **P,**
wobei der Dichtstoff frei von Organozinn-Verbindungen ist und im ausgehärteten Zustand, d.h. nach Aushärtung während 7 Tagen bei 23°C und 50% relativer Luftfeuchtigkeit, einen Sekantenmodul bei 100% Dehnung und 23°C, bestimmt nach DIN EN ISO 8339, von weniger als 0,4 MPa und ein Rückstellvermögen bei 100% Dehnung, bestimmt nach DIN EN ISO 7389, von grösser als 70% aufweist.

Der Sekantenmodul wird bei 100% Dehnung und 23°C gemäss DIN EN ISO 8339 bestimmt. Der erfindungsgemässe Dichtstoff weist im ausgehärteten Zustand einen Sekantenmodul bei 100% Dehnung und 23°C gemäss DIN EN ISO 8339 von weniger als 0,4 MPa auf.

Das Rückstellvermögen wird bei 100% Dehnung gemäss ISO 7389 (DIN-Betonplatten, Aushärtung: 28 Tage bei 23°C und 50% relativer Luftfeuchtigkeit) bestimmt. Der erfindungsgemässe Dichtstoff weist im ausgehärteten Zustand ein Rückstellvermögen bei 100% Dehnung, bestimmt nach ISO 7389, von grösser als 70% auf.

Der erfindungsgemässe Dichtstoff weist vorzugsweise eine Auspresskraft von weniger als 800 N auf. Die Auspresskraft ist ein Mass für die Fliesseigenschaft. Das Verfahren zur Bestimmung der Auspresskraft ist nachstehend im experimentellen Teil beschrieben.

Der Dichtstoff ist bevorzugt ein Baudichtstoff der Klasse 25LM gemäss ISO 11600, d.h. er erfüllt die in dieser Norm enthaltenen Anforderungen für die darin enthaltene Klasse 25LM.

Mit "Poly" beginnende Substanznamen wie Polyol oder Polyisocyanat bezeichnen hier Substanzen, die formal zwei oder mehr der in ihrem Namen vorkommenden funktionellen Gruppen pro Molekül enthalten.

Der Begriff "Silan" bzw. "Organosilan" bezieht sich auf Verbindungen, welche einerseits mindestens eine, üblicherweise zwei oder drei, über Si-O-Bindungen, direkt an das Siliciumatom gebundene hydrolysierbare Gruppen, bevorzugt Alkoxygruppen oder Acyloxygruppen, aufweisen, und andererseits mindestens einen, über eine Si-C-Bindung, direkt an das Siliciumatom gebundenen organischen Rest aufweisen. Silane, die Alkoxygruppen oder Acyloxygruppen aufweisen, sind dem Fachmann auch als Organoalkoxysilane bzw. Organoacyloxysilane bekannt.

Entsprechend bezeichnet der Begriff "Silangruppe" die an den, über die Si-C-Bindung gebundenen, organischen Rest des Silans an eine Verbindung gebundene siliciumhaltige Gruppe. Die Silane bzw. deren Silangruppen haben die Eigenschaft, bei Kontakt mit Feuchtigkeit zu hydrolysieren. Dabei bilden sich Organosilanole, d.h. siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen).

Der Begriff "silanfunktionell" bezeichnet Verbindungen, die Silangruppen aufweisen. "Silanfunktionelle Polymere" sind demnach Polymere, insbesondere organische Polymere, welche mindestens eine, bevorzugt zwei oder mehr, z.B. zwei, Silangruppen aufweisen. Die Silangruppen können als Seitengruppen oder bevorzugt Endgruppen vorliegen. Silanfunktionelle Polymere werden auch als silanterminierte Polymere (STP) bezeichnet. γ-Silan-funktionelle Polymere sind Polymere, bei denen das Si-Atom der Silangruppe über eine 1,3-Propylenbrücke mit dem Polymer verknüpft ist.

Die das silanfunktionelle Polymer enthaltenden Dichtstoffe sind feuchtigkeitshärtend, d.h. unter Anwesenheit von Wasser bzw. Feuchtigkeit, insbesondere Luftfeuchtigkeit, finden die vorstehend beschriebenen Hydrolyse- und Kondensationsreaktionen an den Silangruppen statt, wodurch die Polymermoleküle vernetzen und der Dichtstoff aushärtet. Die Härtung wird auch als Vernetzung bezeichnet.

Als "Aminosilane", "Isocyanatosilane" bzw. "Mercaptosilane" werden Organosilane bezeichnet, deren organischer Rest mindestens eine Aminogruppe, mindestens eine Isocyanatgruppe bzw. mindestens eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.

Unter "Raumtemperatur" wird hier eine Temperatur von 23°C verstanden.

Unter "Molekulargewicht" von Oligomeren oder Polymeren versteht man im vorliegenden Dokument das Molekulargewichtsmittel Mₙ (Zahlenmittel), welches typischerweise mittels GPC gegen Polystyrol als Standard bestimmt wird.

Der erfindungsgemässe Dichtstoff enthält mindestens ein silanfunktionelles Polymer **P,** welches insbesondere Endgruppen der Formel (I) aufweist. 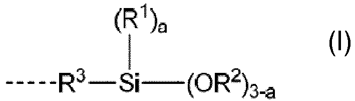 worin der Rest R¹ ein linearer oder verzweigter, einwertiger Kohlenwasserstoffrest mit 1 bis 8 C-Atomen, insbesondere eine Methyl- oder Ethylgruppe, ist,
der Rest R² ein Acylrest oder ein linearer oder verzweigter, einwertiger Kohlenwasserstoffrest mit 1 bis 5 C-Atomen, insbesondere eine Methyl-, Ethyl-oder Isopropylgruppe, bevorzugt eine Ethyl- oder Isopropylgruppe, ist,
der Index a 0 oder 1 oder 2, insbesondere 0, ist und
der Rest R³ ein linearer oder verzweigter, zweiwertiger Kohlenwasserstoffrest mit 1 bis 12 C-Atomen, welcher gegebenenfalls cyclische Anteile und gegebenenfalls ein oder mehrere Heteroatome, insbesondere ein oder mehrere Stickstoffatome, aufweist, insbesondere eine Alkylengruppe mit 1 bis 6 C-Atomen, bevorzugt 2 bis 6 C-Atomen, insbesondere eine Propylengruppe, ist.

Innerhalb einer Silangruppe der Formel (I) stehen R¹ und R² jeweils unabhängig voneinander für die beschriebenen Reste. So sind beispielsweise auch Verbindungen mit Endgruppen der Formel (I) möglich, welche Ethoxydimethoxysilan-Endgruppen (R² = Methyl, R² = Methyl, R² = Ethyl) sind.

In einer bevorzugten Ausführungsform ist das silanfunktionelle Polymer P ein γ-Silan-terminiertes Polymer. In diesem Fall ist der Rest R³ bevorzugt Propylen.

In einer bevorzugten Ausführungsform spaltet das silanfunktionelle Polymer **P** bei der Härtung kein Methanol ab. In dieser Ausführungsform enthält das silanfunktionelle Polymer **P** keine Methoxygruppen, die an Silicium gebunden sind. Bevorzugt handelt es sich dabei um ein silanfunktionelles Polymer **P,** welches Endgruppen der Formel (I) wie vorstehend definiert aufweist, worin R² keine Methylgruppe ist. In diesem Fall weist das silanfunktionelle Polymer **P** bevorzugt an Silicium gebundene Ethoxygruppen auf, insbesondere ist es ein silanfunktionelles Polymer **P,** welches Endgruppen der Formel (I) wie vorstehend definiert aufweist, worin R² eine Ethylgruppe ist. In diesem Fall wird bei der Aushärtung der Zusammensetzung ökologisch und toxikologisch harmloses Ethanol freigesetzt.

In einer weiteren bevorzugten Ausführungsform enthält der Dichtstoff keine Bestandteile, welche bei der Aushärtung Methanol abspalten.

Neben dem silanfunktionellen Polymer **P** können weitere gegebenenfalls vorhandene reaktive Bestandteile, wie z.B. Haftvermittler, Trocknungsmittel, Reaktivverdünner oder Vernetzer, die nachstehend beschrieben werden, bei der Aushärtung gegebenenfalls Methanol abspalten. Auch bei diesen handelt es sich typischerweise um Alkoxygruppen aufweisende, silanfunktionelle Verbindungen. Es ist daher bevorzugt, dass der Dichtstoff keine silanfunktionellen Verbindungen enthält, welche Methoxysilangruppen aufweisen.

Beispiele für geeignete silanfunktionelle Polymere **P** sind silanfunktionelle Polyurethanpolymere, einschliesslich Polyether-Polyurethanen und Polyester-Polyurethanen, Polyharnstoffpolymere, einschliesslich Polyether-Polyharnstoffe, und Polyester-Polyharnstoffe, Polyisocyanurate, Polycarbodiimide, Poly(meth)acrylatpolymere und Polyetherpolymere, wie Polyoxyalkylenpolymere.

In einer bevorzugten Ausführungsform ist das silanfunktionelle Polymer **P** ein silanfunktionelles Polyurethanpolymer **P1,** welches erhältlich ist durch die

Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist.

In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.

Das Silan, welches mindestens eine gegenüber Isocyanatgruppen reaktive Gruppe aufweist, ist beispielsweise ein Mercaptosilan oder ein Aminosilan, insbesondere ein Aminosilan.

Bevorzugt ist das Aminosilan ein Aminosilan AS der Formel (II), 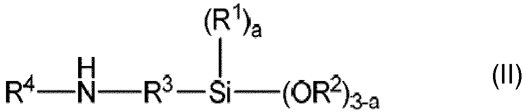 wobei R¹, R², R³ und a wie vorstehend für die Silangruppe der Formel (I) definiert sind, einschliesslich der bevorzugten Ausführungsformen, und R⁴ ein Wasserstoffatom oder ein cyclischer, linearer oder verzweigter, einwertiger Kohlenwasserstoffrest mit 1 bis 20 C-Atomen, welcher gegebenenfalls cyclische Anteile aufweist, oder ein Rest der Formel (III) ist 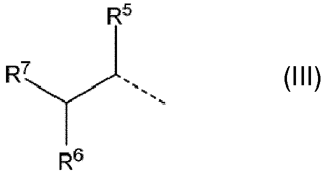 worin die Reste R⁵ und R⁶ jeweils unabhängig voneinander ein Wasserstoffatom oder ein Rest aus der Gruppe bestehend aus -R⁸, -COOR⁸ und -CN sind,
der Rest R⁷ ein Wasserstoffatom oder ein Rest aus der Gruppe bestehend aus -CH₂-COOR⁸, -COOR⁸, -CONHR⁸, -CON(R⁸)2, -CN, -NO₂, -PO(OR⁸)₂, -SO₂R⁸ und -SO₂OR⁸ ist, und
der Rest R⁸ ein, gegebenenfalls mindestens ein Heteroatom aufweisender, Kohlenwasserstoffrest mit 1 bis 20 C-Atomen ist.

Beispiele für geeignete Aminosilane AS sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestern, z.B. N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium, bevorzugt mit Ethoxygruppen.

Als Aminosilane **AS** besonders geeignet sind sekundäre Aminosilane, insbesondere Aminosilane **AS,** bei denen R⁴ in Formel (II) verschieden von H ist. Bevorzugt sind die Michael-artigen Addukte, insbesondere N-(3-Trimethoxysilyl-propyl)-amino-bernsteinsäurediethylester, N-(3-Triethoxysilyl-propyl)-amino-bernsteinsäurediethylester und N-(3-Triisoproxysilyl-propyl)-amino-bernsteinsäurediethylester.

Michael-Akzeptoren sind Verbindungen, welche durch Elektronenakzeptor-Reste aktivierte Doppelbindungen enthalten und daher mit primären Aminogruppen (NH2-Gruppen) in einer der Michael-Addition analogen Weise nucleophile Additionsreaktionen eingehen können (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.

Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0,1 bis 5 Gew.-%, bevorzugt 0,1 bis 2,5 Gew.-%, besonders bevorzugt 0,2 bis 1 Gew.-%, bezogen auf das gesamte Polymer, verbleibt.

Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1,5:1 bis 2,2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole. Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.

Insbesondere geeignet sind Polyoxyalkylendiole oder Polyoxyalkylentriole mit einem Ungesättigtheitsgrad tiefer als 0,02 mEq/g und mit einem mittleren Molekulargewicht im Bereich von 1'000 bis 30'000 g/mol, sowie Polyoxyethylendiole, Polyoxyethylentriole, Polyoxypropylendiole und Polyoxypropylentriole mit einem mittleren Molekulargewicht von 400 bis 20'000 g/mol. Ebenfalls besonders geeignet sind so genannte Ethylenoxid-terminierte ("EOendcapped", ethylene oxide-endcapped) Polyoxypropylenpolyole.

Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole.

Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet sind polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1,6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrig molekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden.

Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

Beispielsweise sind geeignete silanfunktionelle Polymere **P1** kommerziell erhältlich unter den Handelsnamen Polymer ST, beispielsweise Polymer ST50, von der Firma Hanse Chemie AG, Deutschland, sowie unter dem Handelsnamen Desmoseal^{®} von der Firma Bayer MaterialScience AG, Deutschland.

Das silanfunktionelle Polymer **P** ist in einer zweiten bevorzugten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20°C bis 100°C, gegebenenfalls unter Mitverwendung von Katalysatoren.

Als Isocyanatosilan **IS** geeignet sind Verbindungen der Formel (IV). 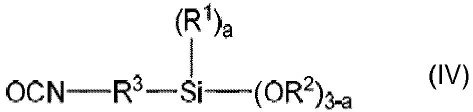 wobei R¹, R², R³ und a wie vorstehend für die Silangruppe der Formel (I) definiert sind, einschliesslich der bevorzugten Ausführungsformen.

Beispiele für geeignete Isocyanatosilane **IS** der Formel (IV) sind Isocyanatomethyltrimethoxysilan, Isocyanatomethyldimethoxymethylsilan, 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium, insbesondere mit Ethoxygruppen.

Bevorzugt weist das Polymer als gegenüber Isocyanatgruppen reaktive funktionelle Endgruppen Hydroxylgruppen auf. Als Hydroxylgruppen aufweisende Polymere eignen sich einerseits bereits genannte hochmolekulare Polyoxyalkylenpolyole, bevorzugt Polyoxypropylendiole mit einem Ungesättigtheitsgrad tiefer als 0,02 mEq/g und mit einem mittleren Molekulargewicht im Bereich von 4'000 bis 30'000 g/mol, insbesondere solche mit einem mittleren Molekulargewicht im Bereich von 8'000 bis 30'000 g/mol.

Andererseits eignen sich auch Hydroxylgruppen aufweisende, insbesondere Hydroxylgruppen terminierte, Polyurethanpolymere zur Umsetzung mit Isocyanatosilanen **IS** der Formel (IV). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1,3:1 bis 4:1, insbesondere von 1,8:1 bis 3:1.

Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.

Beispielsweise sind geeignete silanfunktionelle Polymere **P2** kommerziell erhältlich unter den Handelsnamen SPUR+1010LM, 1015LM und 1050MM von der Firma Momentive Performance Materials Inc., USA, sowie unter den Handelsnamen Geniosil□STP-E15, STP-10 und STP-E35 von der Firma Wacker Chemie AG, Deutschland.

In einer dritten bevorzugten Ausführungsform ist das silanfunktionelle Polymer **P ein** silanfunktionelles Polymer **P3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren gesamte Offenbarung hiermit eingeschlossen ist.

Beispielsweise sind geeignete silanfunktionelle Polymere **P3** kommerziell erhältlich unter den Handelsnamen MS Polymer™ S203H, S303H, S227, S810, MA903 und S943, Silyl™ SAX220, SAX350, SAX400 und SAX725, Silyl™ SAT350 und SAT400, sowie XMAP™ SA100S und SA310S von der Firma Kaneka Corp., Japan, sowie unter den Handelsnamen Excestar® S2410, S2420, S3430, S3630, W2450 und MSX931 von der Firma Asahi Glass Co, Ltd., Japan.

Der Anteil des silanfunktionellen Polymers **P** im Dichtstoff kann in weiten Bereichen variieren. Üblicherweise ist das silanfunktionelle Polymer **P** z.B. in einem Anteil von 5 bis 80 Gew.-%, bevorzugt von 10 bis 60 Gew.-%, bevorzugter von 15 bis 50 Gew.-%, im Dichtstoff enthalten.

Der erfindungsgemässe Dichtstoff umfasst ferner mindestens einen Katalysator für die Vernetzung des silanfunktionellen Polymers **P.** Es können die üblichen, dem Fachmann dafür bekannten Katalysatoren verwendet werden. Der Katalysator ist bevorzugt ein Metallkatalysator und/oder eine stickstoffhaltige Verbindung.

Der erfindungsgemässe Dichtstoff ist im Wesentlichen frei von Organozinn-Verbindungen. Insbesondere beträgt der Zinngehalt der Zusammensetzung weniger als 0.06 Gew.-%, insbesondere weniger als 0.01 Gew.-%. Der erfindungsgemässe Dichtstoff ist bevorzugt ganz frei von Organozinn-Verbindungen und/oder komplett zinnfrei, d.h. der Dichtstoff enthält keine Zinnverbindungen und auch kein Zinn in elementarer oder ionischer Form.

Geeignete Metallkatalysatoren sind z.B. Organotitanate, Organozirconate und Organoaluminate. Die Organotitanate, Organozirconate und Organoaluminate enthalten bevorzugt Liganden auf, welche ausgewählt sind aus einer Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden voneinander sein können. In den nachstehend dargestellten Formeln stellt die gestrichelte Linie die Bindung des Sauerstoffs zum Metall dar.

Als Alkoxygruppe geeignet sind z.B. Isobutoxy, n-Butoxy, Isopropoxy, Ethoxy und 2-Ethylhexoxy. Als Alkoxygruppen haben sich auch sogenannte Neoalkoxy-Substituenten, insbesondere der Formel (V), als besonders geeignet erwiesen.

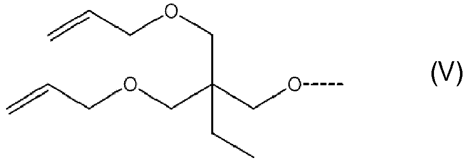

Als Sulfonatgruppe haben sich insbesondere aromatische Sulfonate, deren Aromaten mit einer Alkylgruppe substituiert sind, als geeignet erwiesen. Als bevorzugte Sulfonsäuren gelten Reste der Formel (VI).

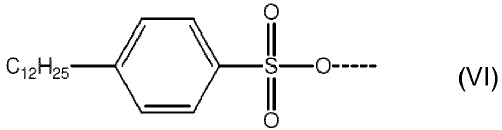

Besonders geeignet als Carboxylatgruppen haben sich z.B. Carboxylate von Fettsäuren erwiesen. Als bevorzugtes Carboxylat gelten Decanoat, Stearat und Isostearat.

Die Organotitanate, Organozirconate und Organoaluminate weisen als Liganden besonders bevorzugt mindestens einen mehrzähnigen Liganden, auch Chelatligand genannt, auf. Der mehrzähnige Ligand ist bevorzugt ein zweizähniger Ligand. Vorzugsweise handelt es sich beim zweizähnigen Liganden um einen Liganden der Formel (VII) 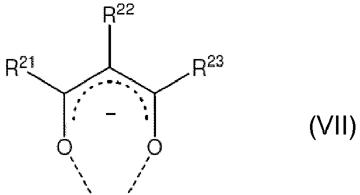 worin der Rest R²¹ ein Wasserstoffatom oder eine lineare oder verzweigte Alkylgruppe mit 1 bis 8 C-Atomen, insbesondere eine Methylgruppe, ist, der Rest R²² ein Wasserstoffatom oder eine lineare oder verzweigte Alkylgruppe mit 1 bis 8 C-Atomen, welche gegebenenfalls Heteroatome aufweist, insbesondere ein Wasserstoffatom, ist, und
der Rest R²³ ein Wasserstoffatom oder eine Alkylgruppe mit 1 bis 8, insbesondere mit 1 bis 3, C-Atomen oder eine lineare oder verzweigte Alkoxygruppe mit 1 bis 8, insbesondere mit 1 bis 3, C-Atomen, ist.

Ein bevorzugter Katalysator ist ein Organotitanat, insbesondere ein Organotitanat der Formel (VIII) 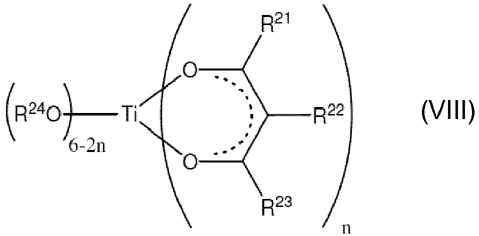 worin die Reste R²¹, R²² und R²³ wie vorstehend in der Formel (VII) definiert sind,
der Rest R²⁴ ein linearer oder verzweigter Alkylrest mit 2 bis 20 CAtomen, insbesondere ein Isobutyl- oder Isopropylrest, ist, und
n 1 oder 2, insbesondere 2, ist.

Bevorzugt sind Organotitanate der Formel (VIII), wobei R²¹ eine Methylgruppe, R²² ein Wasserstoffatom, R²³ eine Methylgruppe oder Methoxy- oder Ethoxygruppe und R²⁴ ein Isobutyl- oder ein Isopropylrest ist.

Weitere geeignete Organotitanate sind Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden, Titan(IV)-Komplexverbindungen mit vier Alkoholat-Liganden, sowie höherkondensierte Organotitanate, insbesondere oligomeres Titan(IV)-tetrabutanolat, auch als Polybutyltitanat bezeichnet.

Konkrete Beispiele sind Bis(ethylacetoacetato)-diisobutoxy-titan(IV), Bis(ethylacetoacetato)-diisopropoxy-titan(IV), Bis(acetylacetonato)-diisopropoxy-titan(IV), Bis(acetylacetonato)-diisobutoxy-titan(IV), Tris(oxyethyl)-amin-isopropoxy-titan(IV), Bis[tris(oxyethyl)amin]-diisopropoxytitan(IV), Bis(2-ethylhexan-1,3-dioxy)-titan(IV), Tris[2-((2-aminoethyl)amino)ethoxy]-ethoxy-titan(IV), Bis(neopentyl(diallyl)oxy-diethoxytitan(IV), Titan(IV)-tetrabutanolat, Tetra-(2-ethylhexyloxy)titanat, Tetra-(isopropoxy)titanat und Polybutyltitanat.

Organotitanate weisen den Vorteil auf, dass eine höhere Geschwindigkeit bei der Vernetzung erreicht werden kann.

Geeignete Organotitanate sind beispielsweise unter den Handelsnamen Tyzor® AA, GBA, GBO, AA-75, AA-65, AA-105, DC, BEAT, BTP, TE, TnBT, KTM, TOT, TPT oder IBAY kommerziell erhältlich von der Firma DuPont, USA, oder unter den Handelsnamen Tytan™ 15 PBT, TET, X85, TAA, ET, S2, S4 oder S6 kommerziell erhältlich von TensoChema AG, Schweiz, und KenReact^{®} KR TTS, 7, 9QS, 12, 26S, 33DS, 38S, 39DS, 44, 134S, 138S, 133DS, 158FS oder LICA^{®} 44 von Kenrich Petrochemicals.

Organozirconate sind kommerziell erhältlich, z.B. bei der Firma Kenrich Petrochemicals. Geeignete Organozirconate sind beispielsweise Ken React® NZ 38J, NZ TPPJ, KZ OPPR, KZ TPP, NZ 01, NZ 09, NZ 12, NZ38, NZ 44, NZ 97. Weitere geeignete Organozirconate sind unter den Handelsnamen Snapcure™ 3020, 3030, 1020 kommerziell erhältlich von der Firma Johnson Matthey & Brandenberger AG, Schweiz. Geeignete Organoaluminate sind z.B. kommerziell erhältlich unter dem Handelsnamen K-Kat® 5218 von der Firma Worlée-Chemie GmbH, Deutschland.

Als Katalysator geeignete stickstoffhaltige Verbindungen sind z.B. Amine wie insbesondere N-Ethyl-diisopropylamin, N,N,N',N'-Tetramethylalkylendiamine, Polyoxyalkylenamine, 1,4-Diazabicyclo[2.2.2]octan; Aminosilane wie 3-Amino-propyl-trimethoxysilan, 3-Aminopropyldimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxy- anstelle der Methoxygruppen am Silicium.

Besonders bevorzugt umfasst der erfindungsgemässe Dichtstoff mindestens eine stickstoffhaltige Verbindung als Katalysator, welche mindestens eine Amidinogruppe aufweist. Insbesondere handelt es sich dabei um eine Verbindung der Formel (IX) 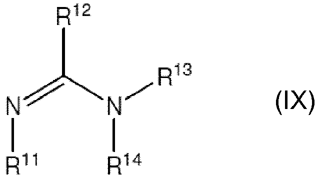 worin der Rest R¹¹ ein Wasserstoffatom, ein einwertiger Kohlenwasserstoffrest mit 1 bis 10 C-Atomen oder zusammen mit R¹⁴ ein gegebenenfalls substituierter, zweiwertiger Kohlenwasserstoffrest mit 1 bis 10 C-Atomen ist,
der Rest R¹² ein Wasserstoffatom, ein einwertiger Kohlenwasserstoffrest mit 1 bis 12 C-Atomen, gegebenenfalls mit cyclischen oder aromatischen Anteilen, und gegebenenfalls mit einem oder mehreren Heteroatomen, eine Aminogruppe oder zusammen mit R¹³ ein gegebenenfalls substituierter, zweiwertiger Kohlenwasserstoffrest mit 1 bis 10 C-Atomen ist,
der Rest R¹³ ein Wasserstoffatom, ein einwertiger Kohlenwasserstoffrest mit 1 bis 12 C-Atomen, gegebenenfalls mit cyclischen oder aromatischen Anteilen, und gegebenenfalls mit einem oder mehreren Heteroatomen, oder zusammen mit R¹² ein gegebenenfalls substituierter, zweiwertiger Kohlenwasserstoffrest mit 1 bis 10 C-Atomen ist, und
der Rest R¹⁴ ein Wasserstoffatom, ein einwertiger Kohlenwasserstoffrest mit 1 bis 10 C-Atomen oder zusammen mit R¹¹ ein gegebenenfalls substituierter, zweiwertiger Kohlenwasserstoffrest mit 1 bis 10 C-Atomen ist.

Beispielsweise handelt es sich beim Rest R¹² und/oder R¹³, welcher Heteroatome aufweist, um einen Alkylrest, der eine Silangruppe aufweist, wie etwa einem Alkyltrialkoxysilanrest, wobei die Silangruppe bevorzugt keine Methoxygruppen aufweist.

Vorzugsweise ist die Verbindung, welche mindestens eine Amidino-Gruppe aufweist, ein Guanidin, ein Imidazol, ein Imidazolin, ein Amidin, bevorzugt ein bicyclisches Amidin, oder ein Derivat dieser Verbindungen. Beispielsweise sind solche Derivate substituierte Imidazole oder Imidazoline, insbesondere eine Silangruppe aufweisende Imidazole oder Imidazoline, wobei die Silangruppe bevorzugt keine Methoxygruppen aufweist.

Bevorzugt handelt es sich beim Amidin um ein bicyclisches Amidin, insbesondere mit 9, 10, 11, oder 12 Kohlenstoffatomen im bicyclischen Bestandteil. Der Vorteil dieser Verbindungen ist, dass sie eine höhere Reaktivität aufweisen und ihr Gehalt daher vergleichsweise gering gehalten werden kann. Dadurch kann wiederum das Ausschwitzen dieser Verbindungen aus der ausgehärteten Zusammensetzung reduziert werden.

Beispiele sind Amidine, wie 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]-undec-7-en; Methyltriazabicyclodecen, Guanidine wie Tetramethylguanidin, 2-Guanidinobenzimidazol, Acetylacetoneguanidin, 1,3-Di-o-tolylguanidin, 1,3-Diphenylguanidin, Tolylbiguanidin, 2-tert.Butyl-1,1,3,3-tetramethylguanidin; und Imidazole wie N-(3-Trimethoxysilylpropyl)-4,5-dihydroimidazol und N-(3-Triethoxysilylpropyl)-4,5-dihydroimidazol.

Insbesondere geeignet sind auch Kombinationen verschiedener Katalysatoren, insbesondere Kombinationen aus mindestens einem Metallkatalysator und mindestens einer stickstoffhaltigen Verbindung, welche mindestens eine Amidinogruppe aufweist.

Als Katalysator bevorzugt sind Organotitanate, Amine und Verbindungen, welche mindestens eine Amidinogruppe aufweisen, wie Amidine, insbesondere bicyclische Amidine, Guanidine und Imidazole, und Kombinationen davon, wobei Amidine, insbesondere bicyclische Amidine, und Organotitanate noch mehr bevorzugt sind. Besonders bevorzugt sind Amidine, insbesondere bicyclische Amidine, wobei eine Kombination von mindestens einem Amidin, insbesondere einem bicyclischen Amidin, und mindestens einem Organotitanat noch mehr bevorzugt ist. Diese Kombination wird besonders bevorzugt eingesetzt, wenn das silanfunktionelle Polymer **P** Silangruppen der Formel (I) aufweist, worin R² eine Ethylgruppe ist.

Der Anteil des Katalysators im Dichtstoff kann in weiten Bereichen variieren, beträgt aber vorzugsweise 0.01 bis 5 Gew.-%, insbesondere 0.05 bis 3 Gew.- %, bevorzugt 0.1 bis 2 Gew.-%, meist bevorzugt 0.2 bis 1 Gew.-%, der gesamten Zusammensetzung.

Der erfindungsgemässe Dichtstoff umfasst ferner gegebenenfalls mindestens einen Weichmacher, wobei der Einsatz von Weichmachern bevorzugt ist. Beispiele für geeignete Weichmacher sind Ester organischer Carbonsäuren oder deren Anhydride, wie Fettsäurealkylester, Phthalate, z.B. Dioctylphthalat, Diisononylphthalat oder Diisodecylphthalat, Adipate, z.B. Dioctyladipat, Azelate und Sebacate, Polyole, z.B. Polyoxyalkylenpolyole oder Polyesterpolyole, organische Phosphor- und Sulfonsäureester, Mineralöle oder Polybutene.

Der Dichtstoff ist aber bevorzugt frei von phthalathaltigen Verbindungen, d.h. der Dichtstoff ist insbesondere frei von phthalathaltigen Weichmachern, die in den Dichtstoffen nach dem Stand der Technik üblicherweise eingesetzt werden.

Als Weichmacher werden bevorzugt Fettsäurealkylester, Alkylsulfonsäureester des Phenols, Mineralöle, Weichmacher auf Basis nachwachsender Rohstoffe, bei denen es sich ebenfalls um Fettsäurealkylester handeln kann, oder Kombinationen davon eingesetzt. In einer bevorzugten Ausführungsform enthält der Dichtstoff mindestens 10 Gew.-% eines oder mehrerer Weichmacher auf Basis nachwachsender Rohstoffe, wobei der Dichtstoff zusätzlich einen oder mehrere weitere Weichmacher, die nicht auf nachwachsenden Rohstoffen basieren, enthalten kann.

Beispiele für Weichmacher auf Basis nachwachsender Rohstoffe sind pflanzliche Öle, wie Rapsöl, Sojaöl und Palmöl, und Ester, insbesondere Methylester, von pflanzlichen Ölen, wie Rapsölmethylester, Sojamethylester und Palmölmethylester.

Beispiele für Weichmacher, die nicht auf nachwachsenden Rohstoffen basieren, aber phthalatfrei sind, sind 1,2-Cyclohexandicarbonsäurediisononylester, Solusolv^{®}2075 von Solutia, die Benzoflex^{®}-Typen von Eastman Chemical Company und Alkylsulfonsäureester des Phenols wie Mesamoll^{®} von Lanxess.

Der Weichmacher umfasst besonders bevorzugt 1,2-Cyclohexandicarbonsäurediisononylester, Alkylsulfonsäureester des Phenols wie Mesamoll^{®}, Rapsölmethylester oder eine Kombination davon, wobei bevorzugt eine Kombination von 1,2-Cyclohexandicarbonsäurediisononylester und Rapsölmethylester verwendet wird.

Die Gesamtmenge an Weichmacher im Dichtstoff, sofern eingesetzt, kann in weiten Bereichen variieren, beträgt aber z.B. 10 bis 80 Gew.-%, bevorzugt 20 bis 60 Gew.-%, bezogen auf den gesamten Dichtstoff, wovon in einer bevorzugten Ausführungsform mindestens 1 Gew.-% und geeigneterweise nicht mehr als 20 Gew.-%, bezogen auf den gesamten Dichtstoff, Weichmacher auf Basis nachwachsender Rohstoffe sind.

Der Dichtstoff kann gegebenenfalls mindestens einen Füllstoff enthalten, was in der Regel bevorzugt ist. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung.

Beispiele für geeignete Füllstoffe sind anorganische und organische Füllstoffe, z.B. natürliche, gemahlene oder gefällte Calciumcarbonate, welche gegebenenfalls mit Fettsäuren, insbesondere Stearinsäure, beschichtet sind, Bariumsulfat (BaSO4, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid. Es ist durchaus möglich und kann sogar von Vorteil sein, eine Mischung verschiedener Füllstoffe einzusetzen.

Die Gesamtmenge an Füllstoffen im Dichtstoff, sofern eingesetzt, kann in weiten Bereichen variieren, beträgt aber z.B. 80 bis 10 Gew.-%, bevorzugt 60 bis 20 Gew.-%, bezogen auf den gesamten Dichtstoff.

Der Dichtstoff kann gegebenenfalls mindestens einen Rheologiemodifizierer, wie Verdickungsmittel oder Thixotropiermittel, z.B. Harnstoffverbindungen der Art, wie sie als Thixotropiermittel ("Thixotropy endowning agent") in WO 02/48228 A2 auf den Seiten 9 bis 11 beschrieben sind, Polyamidwachse, Bentonite oder pyrogene Kieselsäuren; organisch modifiziertes Ricinusöl und Amidwachse oder Kombinationen davon, enthalten.

Weiterhin kann der erfindungsgemässe Dichtstoff zusätzlich weitere Bestandteile enthalten. Beispielsweise sind derartige Bestandteile Lösungsmittel; Fasern, beispielsweise aus Polyethylen; Farbstoffe; Pigmente; Haftvermittler, beispielsweise Epoxysilane, (Meth)acrylsilane, Anhydridosilane oder Addukte der vorgenannten Silane mit primären Aminosilanen, sowie Aminosilane oder Harnstoffsilane; Vernetzer, beispielsweise silanfunktionelle Oligo- und Polymere; Trocknungsmittel, zum Beispiel Vinyltrimethoxysilan, □funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Es ist bevorzugt, dass der erfindungsgemässe Dichtstoff mindestens einen Haftvermittler enthält, insbesondere ein Aminosilan, wie es auch vorhergehend für die Herstellung des silanfunktionellen Polymers **P** beschreiben worden ist. Der Anteil des Haftvermittlers beträgt dabei vorzugsweise 0,01 bis 3 Gew.-%, bezogen auf den gesamten Dichtstoff.

Weiterhin kann der erfindungsgemässe Dichtstoff ein Netz- und/oder Dispergiermittel umfassen. Weiterhin können gegebenenfalls so genannte Reaktivverdünner eingesetzt werden, welche bei der Aushärtung des Dichtstoffs, insbesondere durch Reaktion mit den Silangruppen, in die Polymermatrix eingebunden werden.

In einer besonders bevorzugten Ausführungsform umfasst der Dichtstoff
a) 20 bis 30 Gew.-% mindestens eines silanfunktionellen Polymers **P,** insbesondere eines γ-Silan-terminierten Polymers, wobei das silanfunktionelle Polymer **P** vorzugsweise bei der Härtung kein Methanol abspaltet,
b) 0.01 bis 2 Gew.-% mindestens eines Katalysators für die Vernetzung des silanfunktionellen Polymers **P,** insbesondere eine Verbindung, welche mindestens eine Amidinogruppe aufweist, insbesondere ein bicyclisches Amidin, und/oder ein Organotitanat, bevorzugt eine Kombination von einer Verbindung, welche mindestens eine Amidinogruppe aufweist, insbesondere einem bicyclischen Amidin, und einem Organotitanat,
c1) 0 bis 50 Gew.-%, insbesondere 1 bis 20 Gew.-%, bevorzugt 5 bis 15 Gew.-%, mindestens eines Weichmachers auf Basis eines nachwachsenden Rohstoffs, z.B. ein pflanzliches Öl und/oder ein Ester von einem pflanzlichen Öl, insbesondere Rapsölmethylester,
c2) 0 bis 50 Gew.-% mindestens eines Weichmachers, der nicht auf nachwachsenden Rohstoffen basiert, insbesondere ein Mineralöl, ein Alkylsulfonsäureester des Phenols, ein Fettsäurealkylester oder eine Kombination davon, bevorzugt 1,2-Cyclohexandicarbonsäurediisononylester, und
d) 10 bis 60 Gew.-% mindestens eines Füllstoffs,
wobei der Dichtstoff bevorzugt ein Dichtstoff ist, der bei der Härtung kein Methanol freisetzt.

Der Dichtstoff im ausgehärteten Zustand erfüllt ferner bevorzugt mindestens eine der folgenden Bedingungen:
a) eine Bruchdehnung, bestimmt nach DIN 53504, von mehr als 300%,
b) eine Shore A-Härte, bestimmt nach DIN 53505, von 10 bis 40,
c) eine Hautbildungszeit von 20 bis 360 min.

Die Messmethoden für die angegebenen Werte werden im Rahmen der Ausführungsbeispiele im Detail erläutert.

Der erfindungsgemässe Dichtstoff eignet sich besonders gut als Baudichtstoff, insbesondere als Fassaden-Dichtstoff. Insbesondere eignet er sich als Baudichtstoff der Klasse 25LM gemäss ISO 11600.

In einer besonders bevorzugten Ausführungsform ist der Dichtstoff a) frei von Phthalatverbindungen, b) frei von Zinn, c) spaltet bei der Härtung kein Methanol ab und d) enthält nachwachsende Rohstoffe bzw. Verbindungen auf Basis nachwachsender Rohstoffe wie die vorstehend als Weichmacher beschriebenen Weichmacher auf Basis nachwachsender Rohstoffe.

Die Dichstoff wird vorzugsweise unter Ausschluss von Feuchtigkeit hergestellt und aufbewahrt. Typischerweise ist der Dichtstoff lagerstabil, d.h., er kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Bei der Applikation des erfindungsgemässen Dichtstoffs kommen die im Dichtsstoff enthaltenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen, welche durch den Einsatz von Katalysatoren oder Beschleunigern beschleunigt werden können, härtet der Dichtstoff schliesslich aus. Dieser Prozess wird auch als Vernetzung bezeichnet.

Das für die Aushärtung benötigte Wasser kann entweder aus der Luft stammen (Luftfeuchtigkeit) oder aber der Dichtstoff kann mit einer Wasser enthaltenden Komponente in Kontakt gebracht werden, zum Beispiel durch Bestreichen, beispielsweise mit einem Abglättmittel, oder durch Besprühen, oder es kann dem Dichtstoff bei der Applikation eine Wasser enthaltende Komponente zugesetzt werden, zum Beispiel in Form einer wasserhaltigen Paste.

Der erfindungsgemässe Dichtstoff eignet sich z.B. für die Applikation auf Beton, Mörtel, Backstein, Ziegel, Gips, Naturstein wie Granit oder Marmor, Glas, Glaskeramik, Metall oder Metalllegierung, Holz, Kunststoff und Lack, wobei insbesondere die Applikation auf Baumaterialien bevorzugt ist.

Der erfindungsgemässe Dichtstoff wird bevorzugt in einem Temperaturbereich von 5 bis 45°C appliziert und härtet auch bei diesen Bedingungen aus.

Weiterhin betrifft die Erfindung den ausgehärteten Dichtstoff, welcher erhältlich ist aus dem erfindungsgemässen Dichtstoff nach dessen Härtung mit Wasser, insbesondere in Form von Luftfeuchtigkeit.

Bei den Gegenständen, welche mit dem erfindungsgemässen Dichtstoff abgedichtet werden, handelt es sich bevorzugt um ein Bauwerk, insbesondere um Fassaden.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt. Sofern nicht anders angegeben, beziehen sich Mengen- und Prozentangaben auf das Gewicht.

### Testverfahren

Der **Sekantenmodul** wird bei 100% Dehnung und 23°C gemäss DIN EN ISO 8339 bestimmt.

Das **Rückstellvermögen** wird bei 100% Dehnung gemäss ISO 7389 (DIN-Betonplatten, Lagerung zur Aushärtung: 28 Tage bei 23°C, 50% relativer Luftfeuchtigkeit) bestimmt. Hierfür werden zwei Betonplatten auf einer Polyethylenfolie mithilfe von zwei Abstandshaltern aus Teflon angeordnet, so dass ein Zwischenraum (12x12x50 mm) entsteht, in den der zu prüfenden Dichtstoff gefüllt wird. Der Dichtstoff wird unter den vorstehend genannten Bedingungen gehärtet. Danach wird die Probe mit einer Zugfestigkeitsprüfmaschine gemäss DIN 51221, Teil 2, Klasse 1, um 100% gedehnt (Abstand von 12 auf 24 mm) und Abstandshalter aus Metall mit einer Breite von 24 mm eingefügt. Die Probe wird von der Prüfmaschine genommen und 24 h in der gedehnte Position gehalten. Anschliessend werden die Abstandshalter entfernt und die Probe auf eine mit Talkumpulver behandelte Glasplatte gestellt. Nach 1 h wird der Abstand gemessen und daraus das Rückstellvermögen gemäss der Formel in ISO 7389 errechnet.

Die **Zugfestigkeit,** die **Bruchdehnung** und das **E-Modul** bei 0-100% Dehnung wurden nach DIN 53504 (Zuggeschwindigkeit: 200 mm/min) an während 14 Tagen bei 23°C und 50% relativer Luftfeuchtigkeit ausgehärteten Filmen mit einer Schichtdicke von 2 mm bestimmt.

Der **Weiterreisswiderstand** wurde bestimmt nach DIN 53515, an während 7 Tagen bei 23 °C und 50 % relativer Luftfeuchtigkeit ausgehärteten Filmen mit einer Schichtdicke von 2 mm.

Die **Hautbildungszeit** (Zeit bis zur Klebefreiheit, "tack-free time") wurde bei 23 °C und 50 % relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels einer Pipette aus LDPE erstmals keine Rückstände auf der Pipette mehr zurückblieben.

Für die Bestimmung der **Auspresskraft** wurden die Zusammensetzungen in innenlackierte Aluminiumkartuschen (Durchmesser aussen 46,9 mm, Durchmesser innen 46,2 mm Länge 215 mm, Öffnung 15-M) gefüllt und mit einem Polyethylen-Stopfen (Durchmesser 46,1 mm) von Novelis Deutschland GmbH luftdicht verschlossen. Nach einer Konditionierung von 24 Stunden bei 23°C wurden die Kartuschen geöffnet und mittels Auspressgerät ausgepresst. Dafür wurde eine Düse mit einer 3 mm Innendurchmesser-Öffnung auf das Kartuschengewinde aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.

Die **Härtungsgeschwindigkeit** wird mittels Durchhärtung im Keil bestimmt. Hierfür wird eine Keilform aus Teflon verwendet (Länge des Keils (L) 300 mm, maximale Tiefe des Keils (d) 10 mm, Breite des Keils 10 mm). Der Dichtstoff wird blasenfrei und im Überschuss ausgehend vom tiefsten Punkt des Keils bis zum Ende des Keils eingefüllt. Der überstehende Dichtstoff wird mit eine Holzspachtel in die noch bestehenden Löcher am Rande der Form gepresst und der Rest mit dem Spachtel abgezogen. Der Keil wir bei 23°C und 50% relativer Luftfeuchtigkeit gelagert und nach 1, 2, 3, 4 und 7 Tagen wird die Durchhärtung bestimmt. Hierfür wird vom dünnen Ende des jetzt ausgehärteten Keils der Dichtstoff so weit aus der Form gezogen, bis unausgehärteter Dichtstoff an der Teflonform gefunden wird. Die Länge des bereits ausgehärteten Dichtstoffs in mm (I) wird bestimmt. Anschliessend wird der Dichtstoff wieder in die Form gelegt und leicht angedrückt. Die Durchhärtung wird mit folgender Formel bestimmt (alle Werte in mm): D = (l · d)/ L, wobei D: Durchhärtung, I: Länge bereits ausgehärteter Dichtstoff, L: Keillänge, d: maximale Keiltiefe.

Die **Shore A**-Härte wurde bestimmt nach DIN 53505, an während 14 Tagen bei 23°C und 50% relativer Luftfeuchtigkeit ausgehärteten Probekörpern mit einer Schichtdicke von 6 mm.

### Herstellung des silanfunktionellen Polyurethanpolymers mit Ethoxy-Endgruppen P-EtO

Unter Stickstoffatmosphäre wurden 700 g Polyol Acclaim^{®} 12200 (Bayer MaterialScience AG, Deutschland; low monol Polyoxypropylendiol; OH-Zahl 11,0 mg KOH/g; Wassergehalt ca. 0,02 Gew.-%), 32,1 g Isophorondiisocyanat (Vestanat^{®} IPDI, Evonik Degussa GmbH, Deutschland), 85,4 g 2,2,4-Trimethyl-1,3-pentandioldiisobutyrat (Eastman TXIB™; Eastman Chemical Company, USA) und 0.1 g Bismuttris(neodecanoat) (10 Gew.-% in Hexamoll® DINCH, BASF SE, Deutschland) unter stetigem Rühren auf 90°C aufgeheizt und bei dieser Temperatur belassen. Nach einer Stunde Reaktionszeit wurde mittels Titration ein freier Gehalt an Isocyanatgruppen von 0,7 Gew.-% erreicht. Anschliessend wurden 0,14 mol (entspricht einer stöchiometrischen Umsetzung der NCO-Gruppen mit Silan) reaktives Silan ***(Int-EtO)*** beigefügt und für weitere 2 bis 3 Stunden bei 90°C weitergerührt. Die Reaktion wurde abgebrochen, sobald kein freies Isocyanat mehr mittels IR-Spektroskopie (2275 - 2230 cm⁻¹) nachzuweisen war. Das Produkt wurde auf Raumtemperatur (23°C) abgekühlt und unter Ausschluss von Feuchtigkeit aufbewahrt (theoretischer Polymergehalt = 90%).

Das reaktive Silan ***Int-EtO*** (N-(3-Triethoxysilyl-propyl)-amino-bernsteinsäurediethylester) wurde wie folgt hergestellt: 100 g 3-Aminopropyltriethoxysilan (Dynasylan^{®} AMEO von Evonik Degussa GmbH, Deutschland) wurden vorgelegt. Unter gutem Rühren wurden bei Raumtemperatur langsam 77,8 g Maleinsäure-diethylester (Fluka Chemie GmbH, Schweiz) zugegeben und die Mischung während 12 Stunden bei 60°C gerührt.

### Herstellung des silanfunktionellen Polyurethanpolymers mit Methoxy-Endgruppen P-MeO

Das silanfunktionelle Polyurethanpolymer mit Methoxy-Endgruppen ***P-MeO*** wurde auf die gleiche Weise wie das silanfunktionelle Polyurethanpolymer mit Ethoxy-Endgruppen ***P-EtO*** hergestellt, ausser dass anstelle des reaktiven Silans ***Int-EtO*** das reaktive Silan ***Int-MeO*** (N-(3-Trimethoxysilyl-propyl)-amino-bernsteinsäurediethylester) verwendet wurde. Das reaktive Silan ***Int-MeO*** wurde auf die gleich Weise wie das reaktive Silan ***Int-EtO*** hergestellt, ausser dass anstelle von 3-Aminopropyltriethoxysilan 3-Aminopropyltrimethoxysilan eingesetzt wurde.

### Herstellung des Thixotropierungsmittels TM

In einem Vakuummischer wurden 1000 g 1,2-Cyclohexandicarbonsäurediisononylester (DINCH, Hexamoll® DINCH) und 160 g 4,4'-Diphenylmethandiisocyanat (Desmodur® 44 MC L, Bayer MaterialScience AG, Deutschland) vorgelegt und leicht aufgewärmt. Dann wurden unter starkem Rühren 90 g Monobutylamin langsam zugetropft. Die entstehende weisse Paste wurde unter Vakuum und Kühlung eine Stunde weitergerührt. Das Thixotropierungsmittel TM enthält 20 Gew.-% Thixotropierungsmittel in 80 Gew.-% DINCH.

### Herstellung der Dichtstoffe

In einem Vakuummischer wurden entsprechend den in Tabelle 1 angegebenen Gewichtsteilen das silanfunktionelle Polymer ***(P-MeO** bzw. **P***-***EtO**)*,

Weichmacher (Hexamoll DINCH und/oder Rapsölmethylester), Thixotropierungsmittel ***(TM*** bzw. Thixatrol ST) und Vinyltrimethoxy- bzw. -triethoxysilan (Dynasylan^{®} VTMO bzw. VTEO von Evonik Degussa GmbH, Deutschland) während 5 Minuten gut vermischt. Anschliessend wurden die Füllstoffe (Socal^{®} U1 S2, Solvay SA, Belgien und Omyacarb^{®} 5-GU, Omya AG, Schweiz) während 15 Minuten bei 60 °C eingeknetet. Bei ausgeschalteter Heizung wurden anschliessend die übrigen Bestandteile (Katalysatoren, Silane) zugegeben und unter Vakuum während 10 Minuten zu einer homogenen Paste verarbeitet. Diese wurde dann in innenlackierte Aluminium-Spreizkolbenkartuschen abgefüllt.

**Tabelle 1. Zusammensetzung der Dichtstoffe in Gew.-Teilen**

| | ***Bsp.1*** | ***Bsp.2*** | ***Bsp.3*** |
|---|---|---|---|
| ***P-MeO*** | 25 | 25 | |
| ***P-EtO*** | | | 27 |
| Thixotropierungsmittel ***TM*** | | | 17 |
| Thixatrol ST | 8 | 8 | |
| Dynasylan VTEO | | | 2 |
| Dynasylan VTMO | 1,4 | 1 | |
| Hexamoll DINCH | 10 | 6 | 7 |
| Rapsölmethylester | 15 | 15 | |
| Hydroseal G400H | | 5 | |
| Omyacarb 5 GU | 20 | 24 | 20 |
| Socal U1S2 | 20 | 15 | 25 |
| Tyzor IBAY | | | 0,5 |
| Tytan TAA | | 0.57 | |
| Lupragen N 700 (DBU) | 0,03 | 0.03 | 0,5 |
| Silquest A-1891 | | | 1 |
| Silquest A-1110 | 0,57 | 0.4 | |

### Prüfung der Dichtstoffformulierungen

Die hergestellten Formulierungen wurden mit den vorstehend angegebenen Testverfahren geprüft. Zum Vergleich wurden folgende Handelsprodukte, die ebenfalls auf silanfunktionellen Polymeren basieren, in gleicher Weise getestet:

| | |
|---|---|
| Sikaflex | Sikaflex^{®}AT-Connection |
| Danalim | Danalim^{®}MS Byggefuge 552 |
| Ljungdahl | Ljungdahl^{®}MS 20 Polymeric Modehvid |

In der nachstehenden Tabelle 2 sind die Ergebnisse aufgeführt. In Tabelle 2 sind auch Angaben zu Vorhandensein von Organozinn-Katalysatoren und Phthalatweichmachern in den jeweiligen Formulierungen bzw. Handelprodukten sowie zur Freisetzung von Methanol bei der Härtung enthalten.

**Tabelle 2**

| | Sekantenmodul (23°C) bei 100 % Dehnung [MPa] | Rückstellvermögen [%] | Organozinn-Kat. | Phthalat-Weichmacher | Methanol - Freisetzung bei Härtung |
|---|---|---|---|---|---|
| Sikaflex | 0,35 | 75 | ja | ja | ja |
| Danalim | 0,45 | 20 | ja | ja | ja |
| Ljungdahl | 0,47 | 35 | ja | nein | ja |
| ***Bsp.1*** | 0.17 | 70 | nein | nein | ja |
| ***Bsp.2*** | 0,25 | 75 | nein | nein | ja |
| ***Bsp.3*** | 0,32 | 72 | nein | nein | nein |

Die Eigenschaften der hergestellten Dichtstoffe wurden untersucht. Die Ergebnisse sind in Tabelle 3 gezeigt.

**Tabelle 3**

| | | ***Bsp***. *1* | ***Bsp. 2*** | ***Bsp. 3*** |
|---|---|---|---|---|
| Zugfestigkeit [MPa] | 14d RT | 0.7 | 1.0 | 1.5 |
| Bruchdehnung [%] | 14d RT | 500 | 770 | 420 |
| Sekantenmodul [MPa] | 28d RT (100%) | 0.17 | 0.25 | 0.32 |
| Spannung 24 h | i.O./coh./adh. | i.O. | i.O. | i.O. |
| Weiterreisswiderstand [N/mm] | 7dRT | 3.6 | 4.0 | 5.1 |
| E-Modul 0-100% [MPa] | 14d RT | 0.2 | 0.2 | 0.6 |
| Hautbildungszeit [min] | 1d RT | 120 | 50 | 40 |
| Auspresskraft [N] | 1d RT | 230 | 286 | 650 |
| Durchhärtung [mm] | 1d RT | 2,8 | 3,6 | 2.7 |
| | 2d RT | 5,5 | 5,5 | 4.2 |
| | 3d RT | 6,8 | 6,9 | 5.1 |
| | 4d RT | 8,1 | 8,0 | 7.8 |
| | 7d RT | 9,2 | 9,8 | 8.9 |
| Shore A | 14d RT | 10 | 15 | 30 |
| Rückstellvermögen | | 70 | 75 | 72 |

## Patentansprüche

1. Feuchtigkeitshärtender Dichtstoff umfassend
a) mindestens ein silanfunktionelles Polymer **P** und
b) mindestens einen Katalysator für die Vernetzung des silanfunktionellen Polymers **P,**
wobei der Dichtstoff frei von Organozinn-Verbindungen ist und im ausgehärteten Zustand einen Sekantenmodul bei 100% Dehnung und 23°C, bestimmt nach DIN EN ISO 8339, von weniger als 0,4 MPa und ein Rückstellvermögen bei 100% Dehnung, bestimmt nach DIN EN ISO 7389, von ≥ 70% aufweist.

2. Dichtstoff nach Anspruch 1, **dadurch gekennzeichnet, dass** der Dichtstoff frei von phthalathaltigen Verbindungen ist.

3. Dichtstoff nach Anspruch 1 oder Anspruch 2, **dadurch gekennzeichnet, dass** das silanfunktionelle Polymer **P** bei der Härtung kein Methanol abspaltet, wobei der Dichtstoff bevorzugt keine Bestandteile enthält, welche bei der Aushärtung Methanol abspalten.

4. Dichtstoff nach irgendeinem der vorhergehenden Ansprüche, **dadurch gekennzeichnet, dass** der Dichtstoff eine Auspresskraft bei 23°C von weniger als 800 N aufweist.

5. Dichtstoff nach irgendeinem der vorhergehenden Ansprüche, **dadurch gekennzeichnet, dass** der Dichtstoff a) frei von Phthalatverbindungen ist, b) frei von Zinn ist, c) bei der Härtung kein Methanol abspaltet und d) nachwachsende Rohstoffe enthält.

6. Dichtstoff nach irgendeinem der vorhergehenden Ansprüche, **dadurch gekennzeichnet, dass** der Dichtstoff ein Baudichtstoff der Klasse 25LM gemäss ISO 11600 ist.

7. Dichtstoff nach irgendeinem der vorhergehenden Ansprüche, **dadurch gekennzeichnet, dass** der Dichtstoff ferner umfasst
c) mindestens einen Weichmacher, bevorzugt ausgewählt aus mindestens einem von einem Fettsäurealkylester, einem Mineralöl, einem Alkylsulfonsäureester von Phenol und einem Weichmacher auf Basis nachwachsender Rohstoffe, wobei der Weichmacher besonders bevorzugt 1,2-Cyclohexandicarbonsäurediisononylester, einen Alkylsulfonsäureester von Phenol, Rapsölmethylester oder eine Kombination davon umfasst, und/oder
d) mindestens einen Füllstoff, wobei der mindestens eine Füllstoff vorzugsweise in einer Menge von 10 bis 80 Gew.-% im Dichtstoff enthalten ist.

8. Dichtstoff nach irgendeinem der vorhergehenden Ansprüche, **dadurch gekennzeichnet, dass** der Dichtstoff
c) mindestens 10 Gew.-% eines oder mehrerer Weichmacher auf Basis nachwachsender Rohstoffe enthält, wobei der Weichmacher bevorzugt Rapsölmethylester ist.

9. Dichtstoff nach irgendeinem der vorhergehenden Ansprüche, **dadurch gekennzeichnet, dass** der Katalysator für die Vernetzung des silanfunktionellen Polymers P eine Verbindung, welche mindestens eine Amidinogruppe aufweist, insbesondere ein bicyclisches Amidin oder ein Guanidin, oder ein Organotitanat oder eine Kombination von einer Verbindung, welche mindestens eine Amidinogruppe aufweist, insbesondere ein bicyclisches Amidin oder ein Guanidin, und einem Organotitanat umfasst.

10. Dichtstoff nach irgendeinem der vorhergehenden Ansprüche, **dadurch gekennzeichnet, dass** das silanfunktionelle Polymer P ein γ-Silan-terminiertes Polymer ist.

11. Dichtstoff nach irgendeinem der vorhergehenden Ansprüche, **dadurch gekennzeichnet, dass** er umfasst
a) 20 bis 30 Gew.-% mindestens eines silanfunktionellen Polymers **P,** insbesondere eines γ-Silan-terminierten Polymers, wobei das silanfunktionelle Polymer **P** vorzugsweise ein silanfunktionelles Polymer **P** ist, welches bei der Härtung kein Methanol abspaltet,
b) 0.01 bis 2 Gew.-% mindestens eines Katalysators für die Vernetzung des silanfunktionellen Polymers **P,** insbesondere eine Verbindung, welche mindestens eine Amidinogruppe aufweist, insbesondere ein bicyclisches Amidin, und/oder ein Organotitanat, bevorzugt eine Kombination von einer Verbindung, welche mindestens eine Amidinogruppe aufweist, insbesondere einem bicyclischen Amidin, und einem Organotitanat,
c1) 0 bis 50 Gew.-%, insbesondere 1 bis 20 Gew.-%, bevorzugt 5 bis 15 Gew.-%, mindestens eines Weichmachers auf Basis eines nachwachsenden Rohstoffs, insbesondere Rapsölmethylester,
c2) 0 bis 50 Gew.-% mindestens eines anderen Weichmachers, der nicht auf nachwachsenden Rohstoffen basiert, insbesondere ein Mineralöl, ein Alkylsulfonsäureester von Phenol oder ein Fettsäurealkylester oder eine Kombination davon, bevorzugt 1,2-Cyclohexandicarbonsäurediisononylester, und
d) 10 bis 60 Gew.-% mindestens eines Füllstoffs,
wobei der Dichtstoff bevorzugt ein Dichtstoff ist, der bei der Härtung kein Methanol freisetzt.

12. Dichtstoff nach irgendeinem der vorhergehenden Ansprüche, **dadurch gekennzeichnet, dass** der Dichtstoff im ausgehärteten Zustand mindestens eine der folgenden Bedingungen erfüllt:
a) eine Bruchdehnung, bestimmt nach DIN 53504, von mehr als 300%,
b) eine Shore A-Härte, bestimmt nach DIN 53505, von 10 bis 40,
c) eine Hautbildungszeit von 20 bis 360 min.

13. Dichtstoff nach irgendeinem der vorhergehenden Ansprüche, **dadurch gekennzeichnet, dass** das silanfunktionelle Polymer **P,** welches bevorzugt ein γ-Silan-terminiertes Polymer ist, ausgewählt ist aus
- einem silanfunktionellen Polyurethanpolymer **P1,** erhältlich durch die Umsetzung eines Silans mit mindestens einer gegenüber Isocyanatgruppen reaktiven Gruppe mit einem Isocyanatgruppen aufweisenden Polyurethanpolymer,
- einem silanfunktionellen Polyurethanpolymer **P2,** erhältlich durch die Umsetzung eines Isocyanatosilans **IS** mit einem Polymer, welches gegenüber Isocyanatgruppen reaktive funktionelle Endgruppen aufweist, oder
- einem silanfunktionellen Polymer **P3,** erhältlich durch eine Hydrosilylierungsreaktion von Polymeren mit endständigen Doppelbindungen.

14. Verwendung eines Dichtstoffs nach irgendeinem der Ansprüche 1 bis 13 als Baudichtstoff, insbesondere als Fassaden-Dichtstoff, besonders bevorzugt als Baudichtstoff der Klasse 25LM gemäss ISO 11600.

15. Ausgehärteter Dichtstoff, erhältlich aus einem Dichtstoff nach irgendeinem der Ansprüche 1 bis 13 nach dessen Härtung mit Wasser, insbesondere mit Luftfeuchtigkeit.
